(19) Europäisches Patentamt
European Patent Office
Office européen des brevets

(11) EP 4 787 366 A1

(12) **EUROPEAN PATENT APPLICATION**

(43) Date of publication:
**05.08.2026 Bulletin 2026/32**

(21) Application number: **25305141.1**

(22) Date of filing: **31.01.2025**

(51) International Patent Classification (IPC):
***G10L 15/22*** *(2006.01)* *G10L 25/60* *(2013.01)*
*G10L 15/08* *(2006.01)*

(52) Cooperative Patent Classification (CPC):
**G10L 15/22;** G10L 25/60; G10L 2015/088;
G10L 2015/223

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **NXP B.V.**
**5656 AG Eindhoven (NL)**

(72) Inventors:
- **PILATI, Laurent**
  **06560 Valbonne (FR)**
- **CAMIER, Thomas**
  **06560 Valbonne (FR)**
- **BAQUE, Mathieu**
  **06560 Valbonne (FR)**

(74) Representative: **Schwarzweller, Thomas**
**NXP Semiconductors Germany GmbH**
**Intellectual Property Group**
**Beiersdorfstraße 12**
**22529 Hamburg (DE)**

Remarks:
Amended claims in accordance with Rule 137(2) EPC.

(54) **PROCESSING AUDIO INPUT SIGNALS WITH TRIGGER PROMPTS**

(57) The disclosure relates to a method and system for processing and responding to audio input signals comprising a trigger prompt. Example embodiments include a computer-implemented method comprising: receiving (601) at a first device an audio input signal comprising a trigger prompt; processing (602) at the first device the audio input signal to determine a first quality metric of the audio input signal; transmitting (603) by the first device the first quality metric over a local network; monitoring (604) by the first device whether a higher second quality metric of the audio input signal is transmitted by a second device over the local network; and if a higher second quality metric is not received by the first device, responding (608) by the first device to the trigger prompt.

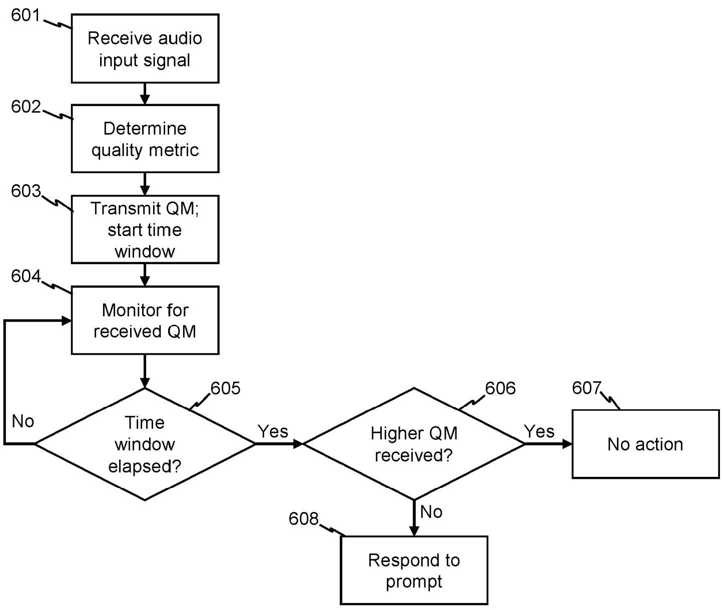


Fig. 6



Processed by Luminess, 75001 PARIS (FR)

## Description

### Field

The disclosure relates to a method and system for processing and responding to audio input signals comprising a trigger prompt.

### Background

Voice user interfaces are now popular ways of interacting with and controlling devices such as mobile phones and smart speakers. A "wake-up" word is commonly used as a first step in causing a device to react to a subsequent voice command. Wake-up words, or trigger prompts, may be of various types. Default trigger prompts may for example be the words "Hey Siri" for Apple devices, "Hey Google" for Google/Android devices and "Alexa" for Amazon smart speakers and home automation systems. Trigger prompts may also be customised for a particular device or user.

Figure 1 illustrates an example situation in which two users Bob and Alice each have a computer device, with Bob having a first device 101 and Alice a second device 102. The devices 101, 102 are in this example mobile phones but could be other types of computer devices. A voice command 103 including a trigger prompt ("Hey NXP") is provided by Bob, which is received by the first device 101 as a first audio signal 104 and also by the second device 102 as a second audio signal 105. As a result, the trigger prompt from Bob may unintentionally lead to the second device 102 also being triggered. This can lead to confusion depending on the associated voice command. This multiple triggering scenario can also occur in the case of wearable devices being worn by multiple people in close proximity and in smart home systems in which multiple devices may be controlled by voice in a common environment accessed by multiple users.

### Summary

According to a first aspect there is provided a computer-implemented method comprising: receiving at a first device an audio input signal comprising a trigger prompt; processing at the first device the audio input signal to determine a first quality metric of the audio input signal; transmitting by the first device the first quality metric over a local network; monitoring by the first device whether a higher second quality metric of the audio input signal is transmitted by a second device over the local network; and if a higher second quality metric is not received by the first device, responding by the first device to the trigger prompt.

The audio input signal may be a voice command from a user.

The first quality metric may be a measure of sound quality of the audio input signal. The measure of sound quality may comprise a signal to noise ratio of the audio input signal.

The first quality metric may be a measure of signal amplitude of the audio input signal. The measure of signal amplitude may be an RMS amplitude of the audio input signal.

The first quality metric may comprise a combination of a signal to noise ratio of the audio input signal and a measure of signal amplitude of the audio input signal. The combination may be defined by a tuning parameter dependent on an acoustic environment.

The first quality metric may be transmitted wirelessly to the local network. The first quality metric may be transmitted with a BLE advertising message.

The first device may respond to the trigger prompt if a higher second quality metric is not received by the first device within a predefined time period following transmitting the first quality metric over the local network. The predefined time period is between around 50 ms and 200 ms, optionally around 100 ms.

According to a second aspect there is provided a computer device comprising: a processor; an input/output interface; a microphone; and a network interface, wherein the processor is configured to: receive an audio input signal comprising a trigger prompt via the microphone and input/output interface; process the audio input signal to determine a first quality metric of the audio input signal; transmit via the network interface the first quality metric to a local network; monitor via the network interface whether a higher second quality metric of the audio input signal is transmitted by another device to the local network; and if a higher second quality metric is not received, respond to the trigger prompt.

The processor may be configured to perform other features defined above relating to the first aspect.

The computer device may be one of a handheld portable electronic device, a mobile phone, a wearable electronic device, a smart home control unit and a smart speaker.

According to a third aspect there is provided a computer program comprising instructions to cause a computer processor to perform the method according to the first aspect.

There may be provided a computer program, which when run on a computer, causes the computer to configure any apparatus, including a circuit, controller, sensor, filter, or device disclosed herein or perform any method disclosed herein. The computer program may be a software implementation, and the computer may be considered as any appropriate hardware, including a digital signal processor, a microcontroller, and an implementation in read only memory (ROM), erasable programmable read only memory (EPROM) or electronically erasable programmable read only memory (EEPROM), as non-limiting examples. The software implementation may be an assembly program.

The computer program may be provided on a non-transitory computer readable medium, which may be a physical computer readable medium, such as a disc or a memory device, or may be embodied as a transient signal. Such a transient signal may be a network download, including an internet download.

These and other aspects of the invention will be apparent from, and elucidated with reference to, the embodiments described hereinafter.

## Brief description of Drawings

Embodiments will be described, by way of example only, with reference to the drawings, in which:

Figure 1 is a schematic drawing of an example trigger prompt received by first and second devices;

Figure 2 is a schematic drawing of an example trigger prompt received by first and second devices each configured to determine and compare quality metrics;

Figure 3 is a plot of sound quality metric (SQE) comparisons determined by first and second devices;

Figure 4 is an example plot of a received audio input signal;

Figure 5 is a plot of Root Mean Square (RMS) amplitude differences between audio input signals received by first and second devices;

Figure 6 is a schematic flow diagram illustrating an example computer-implemented method; and

Figure 7 is a schematic diagram of an example computer device.

It should be noted that the Figures are diagrammatic and not drawn to scale. Relative dimensions and proportions of parts of these Figures have been shown exaggerated or reduced in size, for the sake of clarity and convenience in the drawings. The same reference signs are generally used to refer to corresponding or similar feature in modified and different embodiments.

## Detailed description of embodiments

Figure 2 illustrates schematically a situation, again with users Bob and Alice with respective first and second devices 101, 102, in which Bob issues a voice command 103 to his device 101. The voice command, in this example "Hey NXP, Call Mum" comprises a trigger prompt (i.e. "Hey NXP") and an action for the device 101 to perform ("Call Mum"). The action may be any other type of action that the device 101 is capable of performing, for example playing specified music, performing an internet search for requested information or issuing a control signal to another device. The device 101 in this example is a handheld portable electronic device, in this case in the form of a mobile phone. The device 101 may alternatively be one of a number of different types of device such as a wearable electronic device, a smart home control unit or a smart speaker.

The first device 101 receives an audio input signal from Bob's voice command 103 but before the first device 101 responds to the command it performs a check to determine whether the voice command was in fact intended for the first device 101 to perform. As a first step, the first device 101 analyses the audio input signal to determine a first quality metric 201 of the audio input signal. The quality metric 201 may for example be a score, in this case a simple score from 0 to 5 out of 5, of the quality of the received audio input signal. The first device 101 determines in this example that the quality metric 201 is 4/5, i.e. a relatively high quality metric. This first quality metric (QM) 201 is transmitted by the first device 101 over a local network. The local network in this example is a wireless network, which may for example be a WiFi network (according to an IEEE 802.11x standard), a Bluetooth network and/or a Bluetooth low energy (BLE) network. In some examples the local network may be at least partly a wired network, for example in the case of a home automation system with one or more smart home control units.

Once the first device 101 has transmitted the first QM 201 over the local network, the first device 101 monitors the local network to determine whether a QM has been transmitted by any other device before taking any action. In this example, Alice's device 102, i.e. a second device, has also received the audio input signal from Bob's voice command 103 and, being configured similarly to the first device 101, also determines a QM of the audio input signal This second QM 202 is also transmitted over the local network and is received by the first device 201. Because Alice's device 102 is further away from Bob, the second QM 202 has a lower score, in this example 2/5, than that of the first QM 201. Alice's device 102 also monitors the local network after transmitting the second QM 202 and receives the first QM 201 transmitted from Bob's device 101.

After the first device 101 receives the second QM 202, the first device 101 determines which QM is higher. In this example, the first QM 201 is higher than the second QM 202, which indicates that the audio input signal was not intended for the second device 102. The first device 101 therefore determines that the voice command 103 was addressed to itself and responds to the trigger prompt, together with any associated command. The second device 102, on determining that the first QM 201 is higher than the second QM 202, determines that the voice command 103 in the received audio signal was not intended for itself and takes no action.

This arrangement solves the above-mentioned problem of potential multiple triggering by using a quality metric that will differ between devices that simultaneously receive the same voice command and determining which device is to respond to the voice command based on the higher (or highest) quality metric.

To avoid a perceptible delay in responding to a voice command, each device 101, 102 is configured to respond to the trigger prompt if a higher second QM is not received within a predefined time period, or time window, following transmission of the first QM over the local network. Each device may, however, start processing the voice command before the end of the predefined time period so that there is no delay between receiving the trigger prompt and responding. Each device may stop such processing if a higher second QM is received during the predefined time period. The predefined time period may for example be between around 50 ms and 200 ms, for example around 100 ms. This short time window allows for the same voice command containing a trigger prompt to be detected and acted on by different devices at slightly different times. Each device being configured to pause for this predefined time period allows for detection of any other device that has also detected the same trigger prompt and provided a higher quality metric. If no higher quality metric is received, or if any quality metric that has been received is lower than that determined by the device, the device can proceed with validating the trigger prompt and proceeding with the voice command. Any other devices that also received the voice command take no action and continue operating in listening mode.

Figure 3 is a plot of sound quality estimates (SQEs) for a pair of devices, with SQEs for a second device on the y-axis and SQEs for a first device on the x-axis. In this example the SQE value is a measure of the ratio of direct steered voice beam energy during a voice trigger compared with the broad background noise, which may be used as a quality metric for received audio input signals. A higher SQE indicates a better voice capture by the device. The SQE measurements are normalised to an arbitrary value of between 0 and 1, with 1 being a maximum SQE. In an example implementation, an absolute threshold may be used by a device to determine whether to take action in response to a detected trigger prompt, for example if the SQE is above 0.95 in this case. In a first region 301, the first device is prompted to respond to the detected trigger prompt, while in a second region 302 the second device is prompted to respond. In a third region 303 in which both devices detect a SQE above the absolute threshold, the device detecting a higher SQE is prompted to response to the trigger prompt. Only when both devices detect the same SQE is a 'double trigger' event caused, i.e. where both devices respond to the trigger prompt. When both devices detect different SQEs, a comparison between the different SQEs can be used to determine which device should response to the trigger prompt. The method described herein can thereby reduce double triggering events.

Figure 4 illustrates an audio input signal 401 representing a trigger prompt, plotted as amplitude over time. An amplitude of the audio input signal 401, for example measured as an average RMS amplitude, may be used to determine a quality metric for audio input signals and compare quality metrics between different devices. The quality metric being compared between different devices is a relative rather than absolute comparison, meaning that the absolute magnitude of the received signal does not affect the result.

Figure 5 illustrates a plot of RMS amplitude measurements 501, 502 of successive audio input signals containing trigger prompts (or "wake words" / WWs) received by respective first and second devices (TP Device 1 and TP Device 2, where TP is True Positive), with the measurements showing a difference between RMS amplitudes between the two devices. In a first measurement 503, the RMS measure for the first device is greater than that for the second device by 8.0563 dB, resulting in the first device responding to the trigger prompt. In a second measurement 504, the RMS measure for the second device is greater than that for the first device by 5.0125 dB, resulting in the second device responding to the trigger prompt.

The quality metric may alternatively in some examples be a combination of the above-mentioned amplitude and sound quality estimation metrics. It is expected that an RMS amplitude-based quality metric will tend to be more applicable in a non-reverberant or free-field environment while a SQE quality metric could be more applicable in a reverberant environment.

In general terms, a voice quality metric may be considered to be a function of an RMS amplitude and a SQE metric, i.e.:

$$voice_quality = \propto \times RMS + (1 - \propto) \times SQE$$

where $\propto$ is a tuning parameter that can be set depending on the acoustic environment. The tuning parameter may for example be set to $\propto < 0.5$ for a reverberant environment and set to $\propto > 0.5$ for a free-field environment.

Figure 6 is a schematic flow diagram illustrating an example method of determining response to an audio input signal comprising a trigger prompt. In a first step 601 an audio input signal is received by a first device, the audio input signal comprising a trigger prompt. In step 602, the first device processes the audio input signal to determine a first quality metric (QM) of the audio input signal. At step 603, the first device transmits this first QM over a local network and starts a predefined time window. At step 604 the first device monitors the local network for any QM that has been transmitted by any other device. The first device continues to monitor the local network until at step 605 the predefined time window ends. The first device then determines at step 606 if a higher QM has been received. If a higher QM has been received, at step 607 the first device takes no action. If a higher QM has not been received, at step 608 the first device responds to the trigger prompt, for example by taking an action indicated by a command associated with the trigger prompt.

Figure 7 is a schematic diagram of an example computer device 700 configured to determine a response to an audio input signal comprising a trigger prompt. The computer device 700 comprises a processor 701, an input/output interface 702, a microphone 703 and a network interface 704. The input-output interface 702 is connected to receive audio input signals via the microphone 703 and the processor receives and transmits signals to and from the input-output interface 702. The processor 701 is also connected to the network interface 704 to send and receive signals to and from a local network. The network interface 704 may be a wired and/or wireless interface. The processor 701 may also be connected to a memory 705 and the input-output unit 702 may be connected to a speaker 706.

The processor 701 is configured to receive an audio input signal comprising a trigger prompt via the microphone 703 and the input/output interface 702. The processor then processes the audio input signal to determine a first quality metric of the audio input signal. The first quality metric is then transmitted via the network interface 704 to a local network. The processor monitors the local network via the network interface 704 whether a higher second quality metric of the audio input signal is transmitted by another device to the local network. If a higher second quality metric is not received, the processor 701 responds to the trigger prompt, for example by performing an action indicated by a voice command associated with the trigger prompt.

The computer device 700 may be one of a handheld portable electronic device, a mobile phone, a wearable electronic device, a smart home control unit and a smart speaker.

Various other optional features describe above in relation to the method of determining a response to an audio input signal may also be performed by the processor 701.

An advantage of the method and device disclosed herein is that a device that is closer to a user can be activated in preference to other devices further away without the need for user enrolment of any discrimination between users. This functionality may for example be useful in a smart home environment where multiple devices may be operable by multiple users and where a user may intend only one device to respond to a voice command. The functionality may also be useful for wearable devices such as portable voice activated devices where multiple users wearing such devices require only their own device to be activated in response to a voice command.

From reading the present disclosure, other variations and modifications will be apparent to the skilled person. Such variations and modifications may involve equivalent and other features which are already known in the art of automated speech recognition systems, and which may be used instead of, or in addition to, features already described herein.

Although the appended claims are directed to particular combinations of features, it should be understood that the scope of the disclosure of the present invention also includes any novel feature or any novel combination of features disclosed herein either explicitly or implicitly or any generalisation thereof, whether or not it relates to the same invention as presently claimed in any claim and whether or not it mitigates any or all of the same technical problems as does the present invention.

Features which are described in the context of separate embodiments may also be provided in combination in a single embodiment. Conversely, various features which are, for brevity, described in the context of a single embodiment, may also be provided separately or in any suitable sub-combination. The applicant hereby gives notice that new claims may be formulated to such features and/or combinations of such features during the prosecution of the present application or of any further application derived therefrom.

For the sake of completeness it is also stated that the term "comprising" does not exclude other elements or steps, the term "a" or "an" does not exclude a plurality, a single processor or other unit may fulfil the functions of several means recited in the claims and reference signs in the claims shall not be construed as limiting the scope of the claims.

## Claims

**1.** A computer-implemented method comprising:

receiving (601) at a first device (101) an audio input signal comprising a trigger prompt;
processing (602) at the first device (101) the audio input signal to determine a first quality metric (201) of the audio input signal;
transmitting (603) by the first device (101) the first quality metric (201) over a local network;
monitoring (604) by the first device (101) whether a higher second quality metric (202) of the audio input signal is transmitted by a second device (102) over the local network; and
if a higher second quality metric (202) is not received by the first device (101), responding (608) by the first device (101) to the trigger prompt.

**2.** The computer-implemented method of claim 1, wherein the audio input signal is a voice command (103) from a user.

**3.** The computer-implemented method of claim 1 or claim 2, wherein the first quality metric (201) is a measure of sound quality of the audio input signal.

**4.** The computer-implemented method of claim 3, wherein the measure of sound quality comprises a signal to noise ratio of the audio input signal.

**5.** The computer-implemented method of claim 1 or claim 2, wherein the first quality metric (201) is a measure of signal amplitude of the audio input signal.

**6.** The computer-implemented method of claim 5, wherein the measure of signal amplitude is an RMS amplitude of the audio input signal.

**7.** The computer-implemented method of claim 1 or claim 2, wherein the first quality metric comprises a combination of a signal to noise ratio of the audio input signal and a measure of signal amplitude of the audio input signal.

**8.** The computer-implemented method of claim 7, wherein the combination is defined by a tuning parameter dependent on an acoustic environment.

**9.** The computer-implemented method of any preceding claim, wherein the first quality metric (201) is transmitted wirelessly to the local network.

**10.** The computer-implemented method of claim 9, wherein the first quality metric (201) is transmitted with a BLE advertising message.

**11.** The computer-implemented method of any preceding claim, wherein the first device (101) responds (608) to the trigger prompt if a higher second quality metric (202) is not received by the first device (101) within a predefined time period following transmitting the first quality metric (201) over the local network.

**12.** The computer-implemented method of claim 11, wherein the predefined time period is between around 50 ms and 200 ms, optionally around 100 ms.

**13.** A computer device (700) comprising:

a processor (701);
an input/output interface (702);
a microphone (703); and
a network interface (704),

wherein the processor (701) is configured to:

receive an audio input signal comprising a trigger prompt via the microphone (703) and input/output interface (702);
process the audio input signal to determine a first quality metric (201) of the audio input signal;
transmit via the network interface (704) the first quality metric to a local network;
monitor via the network interface (704) whether a higher second quality metric (202) of the audio input signal is transmitted by another device (102) to the local network; and
if a higher second quality metric (202) is not received, respond to the trigger prompt.

**14.** The computer device (700) of claim 13, wherein the computer device (700) is one of a handheld portable electronic device, a mobile phone, a wearable electronic device, a smart home control unit and a smart speaker.

**15.** A computer program comprising instructions for causing a computer device (700) to perform the method according to any one of claims 1 to 12.

**Amended claims in accordance with Rule 137(2) EPC.**

**1.** A computer-implemented method comprising:

receiving (601) at a first device (101) an audio input signal comprising a trigger prompt;
processing (602) at the first device (101) the audio input signal to determine a first quality metric (201) of the audio input signal;
transmitting (603) by the first device (101) the first quality metric (201) over a local network;
monitoring (604) by the first device (101) whether a higher second quality metric (202) of the audio input signal is transmitted by a second device (102) over the local network; and
if a higher second quality metric (202) is not received by the first device (101), responding (608) by the first device (101) to the trigger prompt,
**characterised in that** the first quality metric (201) is a voice quality metric that is a function of an RMS amplitude and a sound quality estimate, SQE, metric of the audio input signal, such that

$$voice_quality = \propto \times RMS + (1 - \propto) \times SQE$$

where $\propto$ is a tuning parameter that is set depending on an acoustic environment, the tuning parameter being set to $\propto < 0.5$ for a reverberant acoustic environment and set to $\propto > 0.5$ for a free-field acoustic environment.

**2.** The computer-implemented method of claim 1, wherein the audio input signal is a voice command (103) from a user.

**3.** The computer-implemented method of any preceding claim, wherein the first quality metric (201) is transmitted wirelessly to the local network.

**4.** The computer-implemented method of claim 3, wherein the first quality metric (201) is transmitted with a BLE advertising message.

5. The computer-implemented method of any preceding claim, wherein the first device (101) responds (608) to the trigger prompt if a higher second quality metric (202) is not received by the first device (101) within a predefined time period following transmitting the first quality metric (201) over the local network.

6. The computer-implemented method of claim 11, wherein the predefined time period is between around 50 ms and 200 ms, optionally around 100 ms.

7. A computer device (700) comprising:

   a processor (701);
   an input/output interface (702);
   a microphone (703); and
   a network interface (704),

wherein the processor (701) is configured to:

   receive an audio input signal comprising a trigger prompt via the microphone (703) and input/output interface (702);
   process the audio input signal to determine a first quality metric (201) of the audio input signal;
   transmit via the network interface (704) the first quality metric to a local network;
   monitor via the network interface (704) whether a higher second quality metric (202) of the audio input signal is transmitted by another device (102) to the local network; and
   if a higher second quality metric (202) is not received, respond to the trigger prompt,
   **characterised in that** the first quality metric (201) is a voice quality metric that is a function of an RMS amplitude and a sound quality estimate, SQE, metric of the audio input signal, such that

$$voice_quality = \propto \times RMS + (1 - \propto) \times SQE$$

   where $\propto$ is a tuning parameter that is set depending on an acoustic environment, the tuning parameter being set to $\propto < 0.5$ for a reverberant acoustic environment and set to $\propto > 0.5$ for a free-field acoustic environment.

8. The computer device (700) of claim 7, wherein the computer device (700) is one of a handheld portable electronic device, a mobile phone, a wearable electronic device, a smart home control unit and a smart speaker.

9. A computer program comprising instructions for causing a computer device (700) to perform the method according to any one of claims 1 to 6.

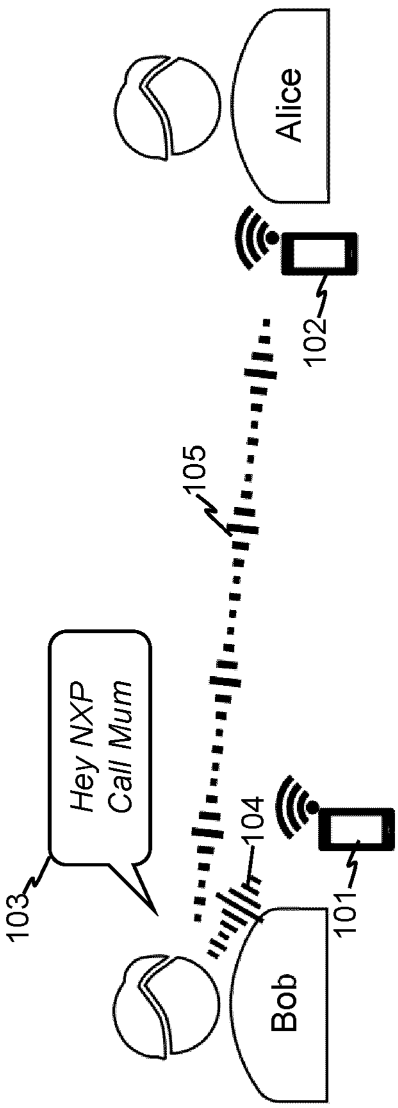


Fig. 1

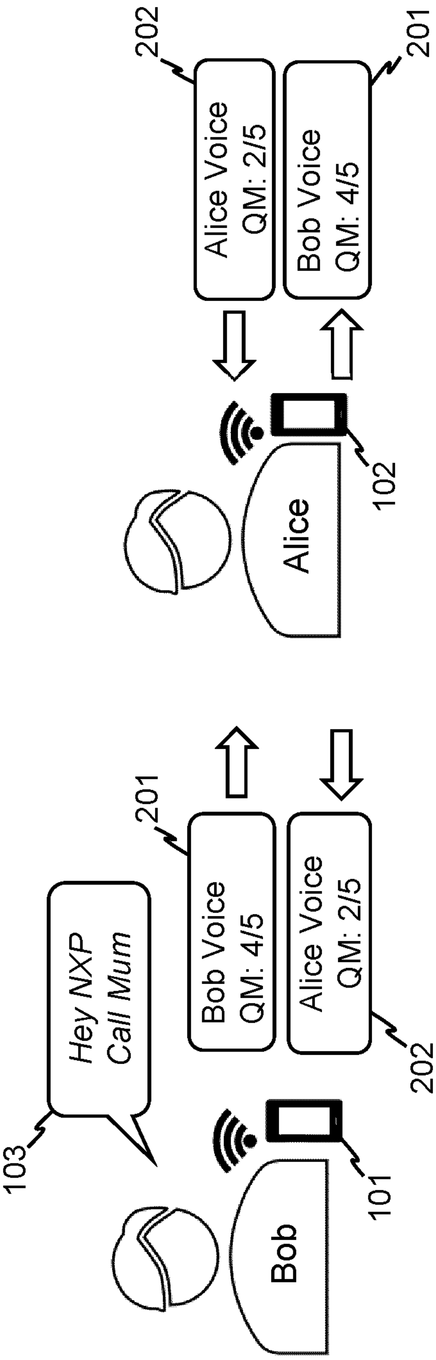
202
201
Alice Voice
QM: 2/5
Bob Voice
QM: 4/5
Alice
102
201
Bob Voice
QM: 4/5
Alice Voice
QM: 2/5
202
Hey NXP
Call Mum
103
Bob
101

Fig. 2

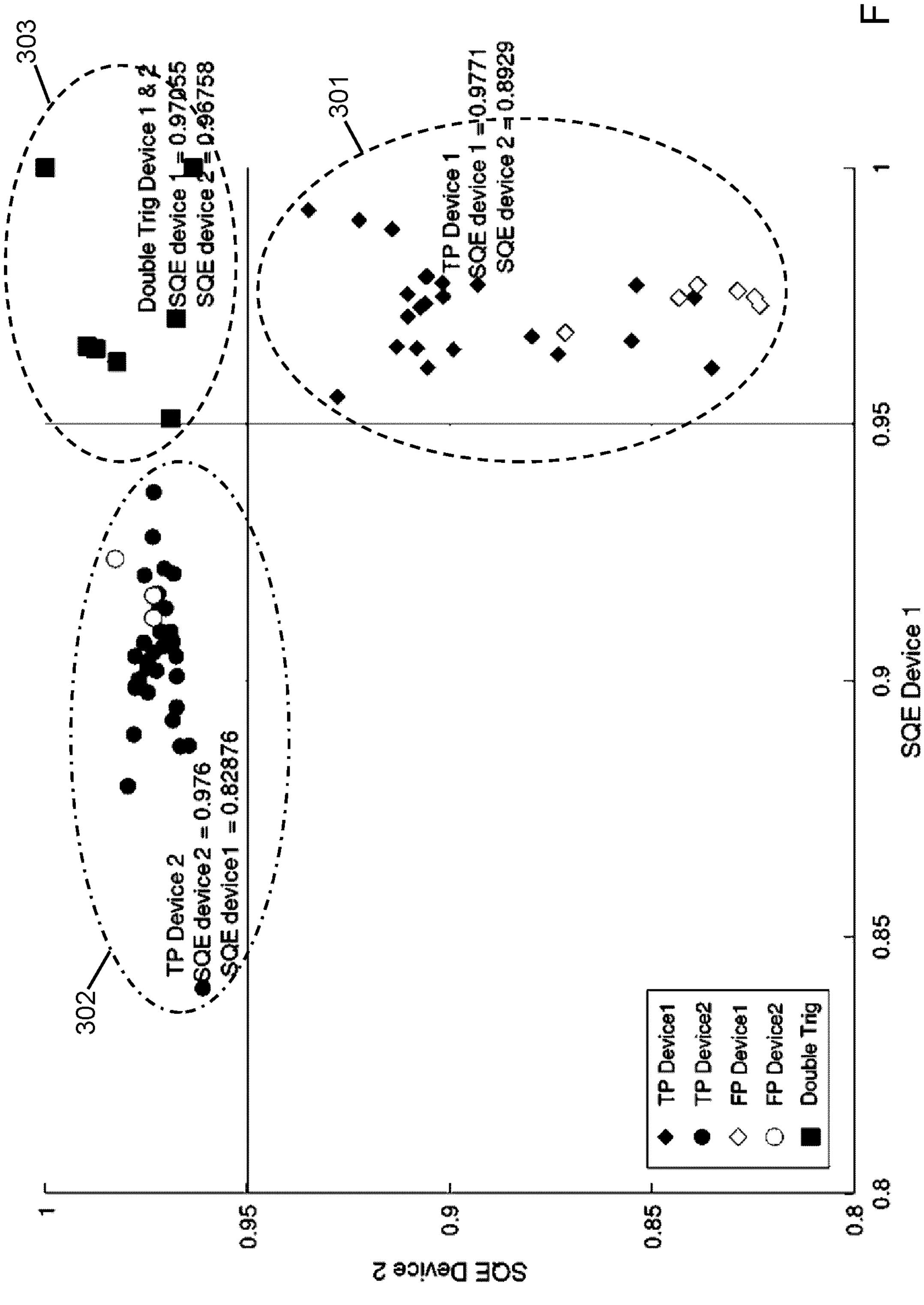
303
301
302
Double Trig Device 1 & 2
SQE device 1 = 0.97055
SQE device 2 = 0.96758
TP Device 1
SQE device 1 = 0.9771
SQE device 2 = 0.8929
TP Device 2
SQE device 2 = 0.976
SQE device1 = 0.82876
TP Device1
TP Device2
FP Device1
FP Device2
Double Trig
SQE Device 1
SQE Device 2
0.8
0.85
0.9
0.95
1

Fig. 3

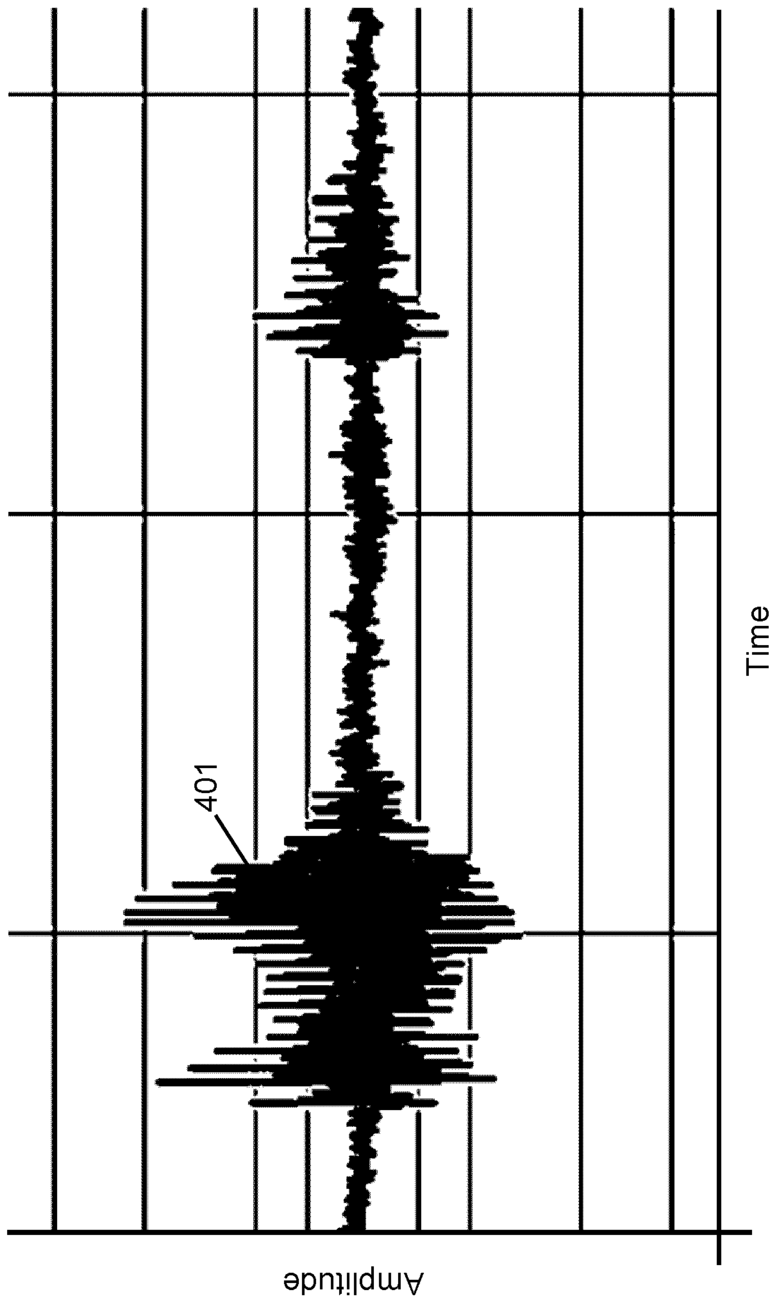


Fig. 4

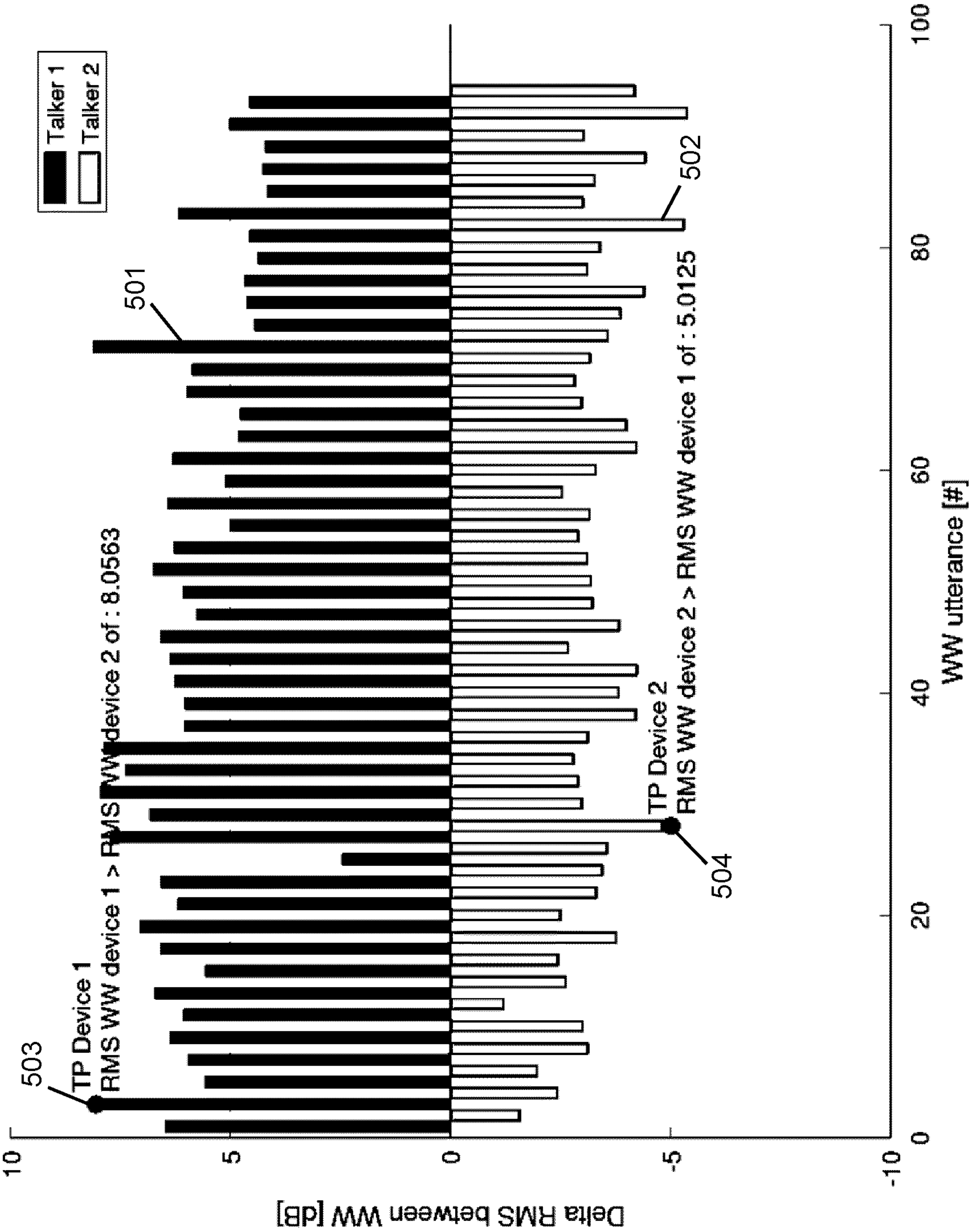

Talker 1
Talker 2
501
502
503
504
TP Device 1
RMS WW device 1 > RMS WW device 2 of : 8.0563
TP Device 2
RMS WW device 2 > RMS WW device 1 of : 5.0125
Delta RMS between WW [dB]
WW utterance [#]
10
5
0
-5
-10
0
20
40
60
80
100


Fig. 5

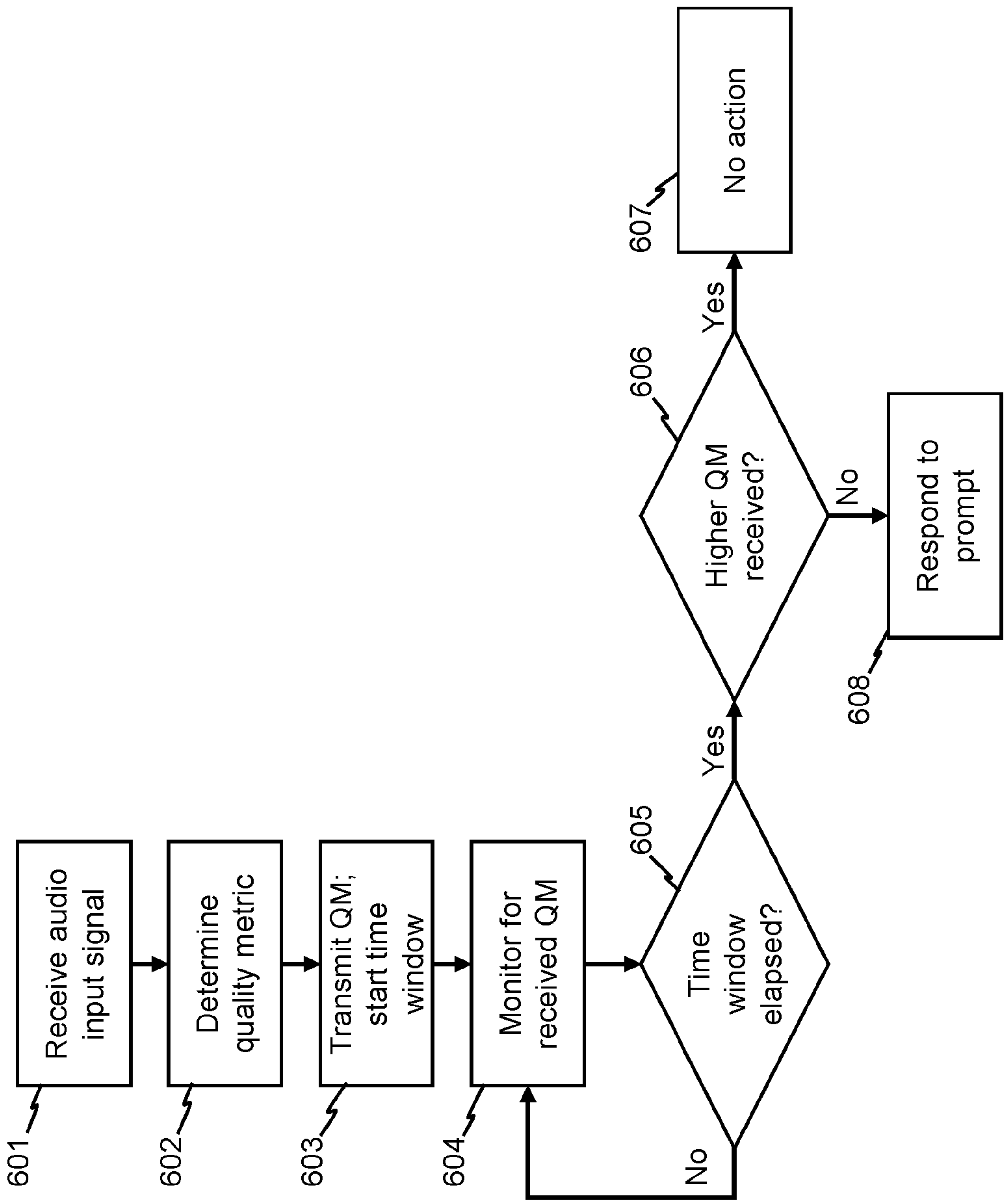
601
Receive audio input signal
602
Determine quality metric
603
Transmit QM; start time window
604
Monitor for received QM
605
Time window elapsed?
No
Yes
606
Higher QM received?
Yes
607
No action
No
608
Respond to prompt

Fig. 6

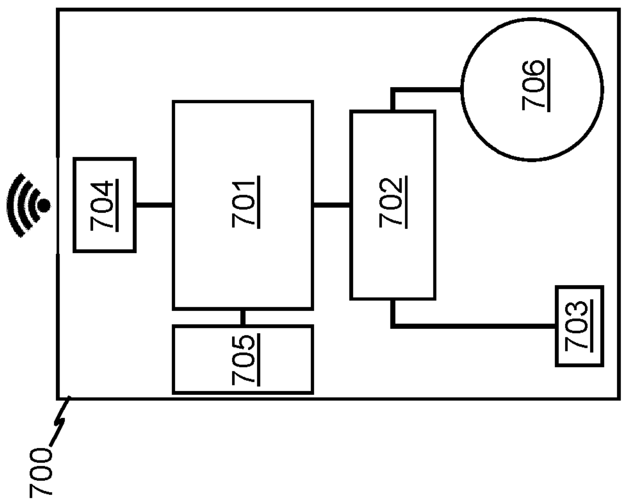


Fig. 7

Europäisches Patentamt
European Patent Office
Office européen des brevets

# EUROPEAN SEARCH REPORT

Application Number
EP 25 30 5141

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/090864 A1 (AMAZON TECH INC [US]) 30 March 2017 (2017-03-30) | 1-7,9-15 | INV. G10L15/22 |
| A | * paragraphs [0020], [0022], [0023], [0024], [0037], [0038], [0039]; figure 1B * * paragraphs [0014], [0020], [0033] * * paragraphs [0027], [0035] * * paragraph [0001] * ----- | 8 | ADD. G10L25/60 G10L15/08 |
| X | US 2021/029048 A1 (PIERSOL KURT [US]) 28 January 2021 (2021-01-28) | 1-4, 9-11,13, 15 | |
| A | * paragraphs [0243] - [0288]; figures 8-12 * * paragraphs [0038], [0048] * ----- | 5-8,12 | |
| X | US 2020/066279 A1 (SAMSUNG ELECTRONICS CO LTD [KR]) 27 February 2020 (2020-02-27) * figures 1,6A,8A * * paragraphs [0088], [0123], [0141], [0142], [0146], [0181], [0187], [0198], [0199] * ----- | 1,5,12, 13 | TECHNICAL FIELDS SEARCHED (IPC) G10L |
| X | CN 113 470 634 A (HISENSE GROUP) 1 October 2021 (2021-10-01) * abstract; figure 1 * ----- | 1,7,8, 13,15 | |

The present search report has been drawn up for all claims

1

| Place of search | Date of completion of the search | Examiner |
|---|---|---|
| Munich | 6 May 2025 | Krembel, Luc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 25 30 5141

This annex lists the patent family members relating to the patent documents cited in the above-mentioned European search report. The members are as contained in the European Patent Office EDP file on
The European Patent Office is in no way liable for these particulars which are merely given for the purpose of information.

06-05-2025

| Patent document cited in search report | Publication date | Patent family member(s) | Publication date |
|---|---|---|---|
| US 2017090864 A1 | 30-03-2017 | US 2017090864 A1 | 30-03-2017 |
| | | WO 2017058648 A1 | 06-04-2017 |
| US 2021029048 A1 | 28-01-2021 | AU 2019279572 A1 | 09-07-2020 |
| | | CN 111656439 A | 11-09-2020 |
| | | EP 3714454 A1 | 30-09-2020 |
| | | KR 20200090916 A | 29-07-2020 |
| | | US 2019372902 A1 | 05-12-2019 |
| | | US 2021029048 A1 | 28-01-2021 |
| | | WO 2019231530 A1 | 05-12-2019 |
| US 2020066279 A1 | 27-02-2020 | US 2020066279 A1 | 27-02-2020 |
| | | WO 2020045950 A1 | 05-03-2020 |
| CN 113470634 A | 01-10-2021 | NONE | |

EPO FORM P0459

For more details about this annex : see Official Journal of the European Patent Office, No. 12/82